# FASCICULE DE BREVET EUROPEEN

(11) **EP 3 521 173 B1**
(45) Date de publication et mention de la délivrance du brevet: **29.07.2020**
(21) Numéro de dépôt: 19151076.7
(22) Date de dépôt: 10.01.2019
(51) Int. Cl.: B64D 27/26, B64D 27/18

(54) **ENSEMBLE POUR AERONEF COMPRENANT UNE STRUCTURE PRIMAIRE DE MAT D'ACCROCHAGE FIXEE A UN CAISSON DE VOILURE A L'AIDE D'UNE LIAISON BOULONNEE**
EINHEIT FÜR LUFTFAHRZEUG, DIE EINE PRIMÄRSTRUKTUR EINER AUFHÄNGESÄULE UMFASST, DIE AN EINEM FAHRWERKSKASTEN MITHILFE EINER VERSCHRAUBTEN VERBINDUNG BEFESTIGT IST
ASSEMBLY FOR AIRCRAFT COMPRISING A MOUNTING STRUT PRIMARY STRUCTURE ATTACHED TO A WING BOX BY MEANS OF A BOLTED CONNECTION

(30) Priorité: 01.02.2018 FR 1850868
(43) Date de publication de la demande: 07.08.2019
(73) Titulaire: AIRBUS OPERATIONS (S.A.S), 31060 Toulouse (FR)
(72) Inventeur: LAFONT, Laurent, 31320 Pechbusque (FR); COLMAGRO, Jérôme, 31500 Toulouse (FR); DIDA, Stéphane, 31470 Fontenilles (FR)
(74) Mandataire: Gicquel, Olivier Yves Gérard

(56) Documents cités:
- FR-A1- 2 836 672
- FR-A1- 2 889 163
- FR-A1- 2 915 178
- US-A- 3 831 888

## Description

La présente invention concerne un ensemble pour un aéronef comprenant une structure primaire de mât d'accrochage fixée à un caisson de voilure à l'aide d'une liaison boulonnée, ainsi qu'un aéronef comportant au moins un tel ensemble.

Sur les aéronefs existants, les moteurs tels que les turboréacteurs sont suspendus en dessous de la voilure par des dispositifs d'accrochage complexes, également appelés « EMS » (de l'anglais « Engine Mounting Structure »), ou encore mâts d'accrochage. Les mâts d'accrochage habituellement employés présentent une structure primaire, également dite structure rigide, souvent réalisée sous forme d'un caisson, c'est-à-dire réalisée par l'assemblage de longerons inférieurs et supérieurs raccordés entre eux par une pluralité de nervures transversales de renfort situées à l'intérieur du caisson et à ses extrémités. Les longerons sont agencés en faces inférieure et supérieure, tandis que des panneaux latéraux ferment le caisson en faces latérales. De plus, le mât d'accrochage est agencé en partie supérieure du moteur, entre ce dernier et le caisson de voilure. Cette position horaire est dite « à 12h ».

De façon connue, la structure primaire de ces mâts est conçue pour permettre la transmission à la voilure des efforts statiques et dynamiques engendrés par les moteurs, tels que le poids, la poussée, ou encore les différents efforts dynamiques, notamment ceux liés aux cas de défaillances telles que la perte de pâles (FBO, de l'anglais « Fan Blade Out »), effacement du train avant, atterrissage dynamique, etc.

Dans les mâts d'accrochage connus de l'état de la technique, la transmission des efforts entre sa structure primaire et le caisson de voilure est classiquement assurée par un jeu d'attaches comprenant une attache avant, une attache arrière, ainsi qu'une attache intermédiaire, cette dernière étant notamment destinée à reprendre les efforts de poussée générés par le moteur. Ces attaches sont classiquement interposées verticalement entre le caisson de voilure et la structure primaire du mât d'accrochage.

Sur les moteurs récents, le diamètre est de plus en plus élevé. Pour les moteurs à double flux tels que les turboréacteurs, l'important taux de dilution recherché conduit à obtenir un encombrement particulièrement élevé, puisqu'une augmentation du taux de dilution engendre inéluctablement une hausse du diamètre du moteur, et plus particulièrement une hausse du diamètre de son carter de soufflante.

Par conséquent, avec une garde au sol qui est déterminée de manière à rester acceptable du point de vue sécuritaire, l'espace restant entre l'élément de voilure et le moteur s'avère de plus en plus restreint. De ce fait, il devient difficile d'implanter le mât d'accrochage ainsi que les différentes attaches voilure dans cet espace vertical restant, usuellement dédié à cette implantation. Cette difficulté est d'autant plus élevée que les efforts qui transitent sont également d'intensités élevées, et requièrent des dimensionnements appropriés pour le caisson de voilure et la structure primaire. En effet, ces derniers doivent présenter des dimensions suffisantes pour apporter une résistance mécanique capable de supporter le passage des efforts du moteur vers l'élément de voilure, avec une faible déformée sous contrainte dans le but de ne pas dégrader les performances aérodynamiques du système propulsif.

Dans l'état de la technique, de multiples solutions ont été proposées pour rapprocher le moteur au plus près de l'élément de voilure auquel il est suspendu, et ce dans le but de conserver la garde au sol requise.

Néanmoins, ces solutions doivent être améliorées en permanence pour s'adapter aux diamètres de carter de soufflante toujours plus élevés, retenus pour satisfaire les besoins en taux de dilution.

Un ensemble d'aéronef comprenant une structure primaire de mât d'accrochage fixée à un caisson de voilure à l'aide d'une liaison boulonnée tel que décrit dans le document US3831888 permet d'approcher au plus près la structure primaire du mât d'accrochage de l'aile.

L'invention vise à proposer une solution différente de celle décrite dans le brevet US3831888 et propose un ensemble pour un aéronef tel que revendiqué dans la revendication 1.

Un tel ensemble permet d'approcher au plus près la structure primaire du mât d'accrochage de l'aile.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de côté d'un aéronef comportant un ensemble selon l'invention,
la Fig. 2 montre une vue de côté de l'ensemble selon l'invention avec son moteur,
la Fig. 3 montre une vue en perspective de l'ensemble selon l'invention,
la Fig. 4 montre un agrandissement des moyens de fixation mis en œuvre dans l'ensemble selon l'invention,
la Fig. 5 montre une coupe selon le plan V de la Fig. 4 de l'ensemble selon l'invention,
la Fig. 6 montre une vue en perspective d'une attache arrière entre le mât d'accrochage et l'aile,
la Fig. 7 montre une coupe selon le plan V de la Fig. 4 de l'ensemble selon l'invention, et
la Fig. 8 montre une vue de dessus de l'ensemble selon l'invention.

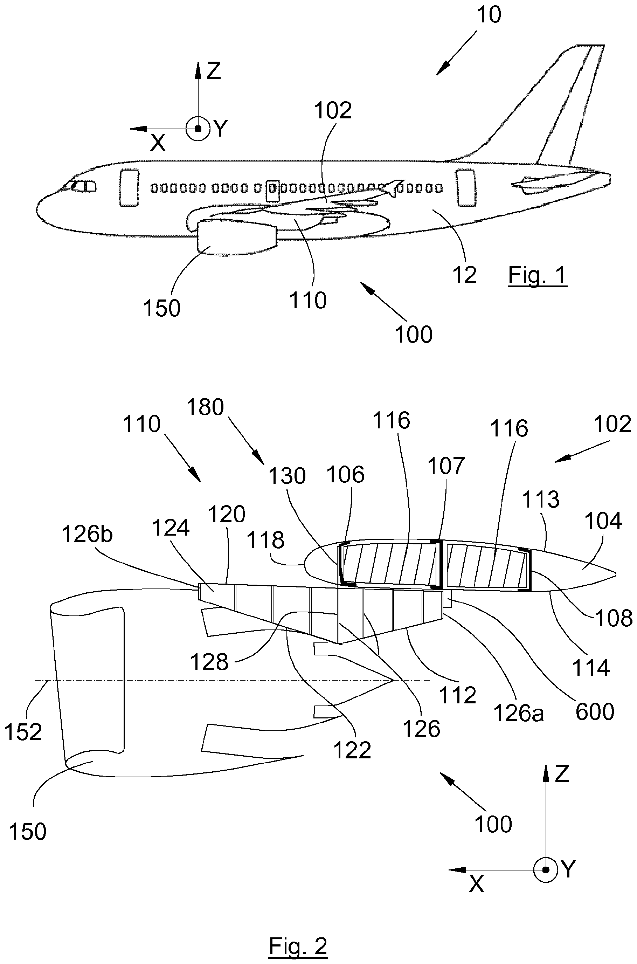

La Fig. 1 montre un aéronef 10 comprenant un fuselage 12 sur lequel sont fixées deux ailes 102 (une seule étant visible sur la Fig. 1), chaque aile 102 faisant partie intégrante d'un ensemble 100 selon l'invention.

L'ensemble 100 supporte un moteur 150 en particulier à double flux et à double corps, tel qu'un turboréacteur. L'ensemble 100 comprend non seulement l'aile 102, mais également un mât d'accrochage 110 agencé sous l'aile 102 et sous lequel est suspendu le moteur 150 et qui est interposé entre l'aile 102 et le moteur 150.

Dans toute la description qui va suivre, et par convention, la direction X correspond à la direction longitudinale de l'ensemble 100 qui est également assimilable à la direction longitudinale du moteur 150, cette direction X étant parallèle à un axe longitudinal du moteur 150. D'autre part, la direction Y correspond à la direction orientée transversalement par rapport à l'ensemble 100, également assimilable à la direction transversale du moteur 150. Enfin, la direction Z correspond à la direction verticale ou de la hauteur, ces trois directions X, Y et Z étant orthogonales entre elles.

Les termes « avant » et « arrière » sont à considérer par rapport à une direction d'avancement de l'aéronef 10 rencontrée suite à la poussée exercée par les moteurs 150, cette direction étant globalement orientée selon la direction X.

La Fig. 2 représente l'ensemble 100 sous lequel est suspendu le moteur 150, d'axe longitudinal 152. L'aile 102 de l'ensemble 100 comporte un caisson de voilure 104 s'étendant selon une direction d'envergure de l'aile. Le caisson de voilure 104 est formé par un longeron avant 106, un longeron arrière 108, un longeron intermédiaire ou diaphragme inter nervure 107, une peau supérieure d'extrados 113 ainsi qu'une peau inférieure d'intrados 114. Les trois longerons 106, 108 et 107 s'étendent selon la direction d'envergure et sont espacés les uns des autres selon une direction de la corde de l'aile 102. Des nervures intérieures de renfort 116 sensiblement perpendiculaires au longeron avant 106 sont logées à l'intérieur du caisson de voilure 104. En outre, à l'avant du caisson de voilure 104, l'aile 102 comporte un capotage 118 formant le bord d'attaque de l'aile 102.

L'ensemble 100 comporte également le mât d'accrochage 110 qui comprend une structure primaire 112 en forme de caisson, dit caisson primaire.

La structure primaire 112, ou structure rigide, permet la transmission au caisson de voilure 104 des efforts statiques et dynamiques engendrés par le moteur 150. Le caisson primaire formant la structure primaire 112 s'étend sur toute la longueur de la structure primaire 112, selon la direction X. Le caisson primaire présente une conception classique, et il est délimité vers le haut par un longeron supérieur 120, vers le bas par un longeron inférieur 122, et latéralement par des panneaux latéraux 124.

Comme cela est visible sur la Fig. 2, le longeron supérieur 120 se situe au moins en partie sous le caisson de voilure 104.

En outre, le caisson primaire formant la structure primaire 112 est équipé de nervures transversales de renfort 126, 126a-b, de préférence agencées sensiblement dans des plans YZ et réparties selon la direction X. Il s'agit de nervures transversales intérieures 126, d'une nervure transversale de renfort 126a fermant l'arrière du caisson primaire, dite nervure de fermeture arrière, ainsi que d'une nervure transversale de renfort 126b fermant l'avant du caisson primaire, dite nervure de fermeture avant.

Le caisson primaire présente une section transversale YZ en forme générale de rectangle ou trapèze, de dimension évolutive le long de la direction X. De préférence, cette section transversale se rétrécit à partir d'une portion médiane, en allant vers l'avant et vers l'arrière.

La fixation du moteur 150 sur le caisson primaire s'effectue d'une manière conventionnelle, qui ne sera pas détaillée dans le cadre de cette invention. Elle est réalisée par des attaches moteur classiques, connues de l'homme du métier.

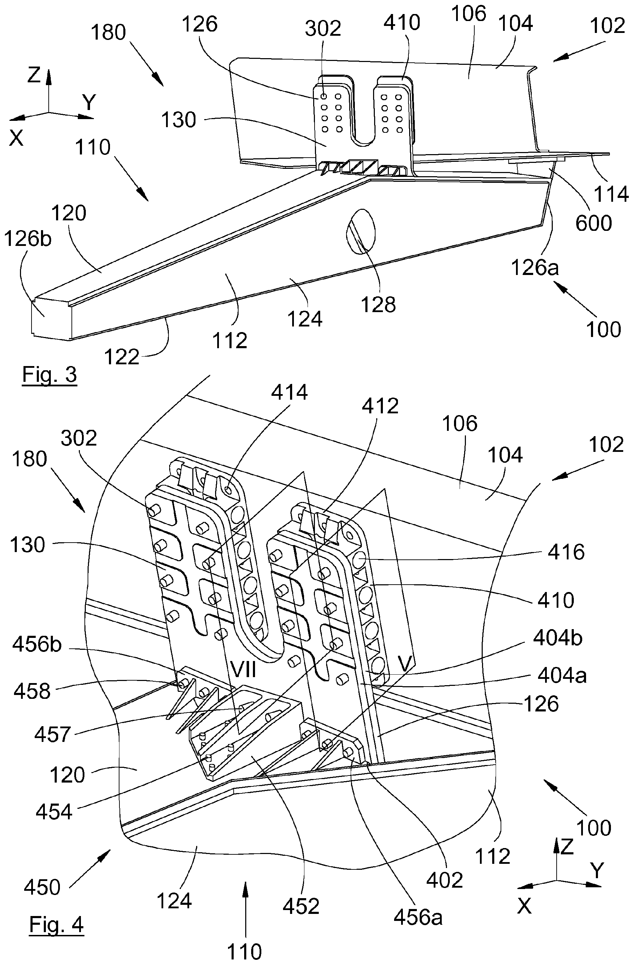

L'ensemble 100 comporte également des moyens de fixation 180 qui assurent la fixation du mât d'accrochage 110 à l'aile 102. Les Figs. 3 à 5 montrent les moyens de fixation 180 mis en œuvre dans le cadre de l'invention.

Dans le cadre de l'invention, le longeron supérieur 120 présente une fente 402 qui s'étend dans un plan globalement parallèle au longeron avant 106.

L'une des nervures transversales de renfort 126, appelée ici nervure de fixation, qui est ici sensiblement au milieu du caisson primaire, présente une partie inférieure 128 (vue à travers une zone éclatée de la structure primaire sur la Fig. 3) qui est logée et fixée à l'intérieur de la structure primaire 112 et une partie supérieure 130 qui traverse la fente 402 pour s'étendre à l'extérieur du caisson primaire formant la structure primaire 112.

Une autre réalisation possible est de considérer que le longeron supérieur soit continu de l'avant vers l'arrière du caisson primaire et que la nervure de fixation soit constituée d'une partie inférieure 128 et d'une partie supérieure 130 qui sont fixées l'une à l'autre par des boulons traversant ledit longeron supérieur.

Les moyens de fixation 180 comportent une pluralité de boulons de fixation 302 où chaque boulon de fixation 302 fixe la partie supérieure 130 au longeron avant 106 et présente son axe perpendiculairement à la nervure de fixation 126. Les moyens de fixation 180 assurent ainsi la fixation de la partie supérieure 130 au longeron avant 106.

Le longeron avant 106 et la nervure de fixation 126 sont parallèles entre eux et une face arrière de la nervure de fixation 126 est en regard d'une face avant du longeron avant 106.

Une telle implémentation permet un gain de place du fait d'un assemblage compact, ainsi qu'une distribution avantageuse des efforts dans le caisson de voilure 104.

Pour assurer une certaine flexibilité de l'ensemble 100, la nervure de fixation 126 prend la forme d'une lame flexible qui présente préférentiellement une faible raideur transverse en veillant à ce que les contraintes transverses ne dépassent pas le tiers des contraintes situées dans le plan de la nervure de fixation 126.

Afin d'ajuster la flexibilité de l'ensemble 100, la nervure de fixation 126 peut être constituée de plusieurs lames flexibles 404a-b apposées les unes contre les autres, et préférentiellement, afin d'assurer une sécurité en cas de rupture, d'une des lames, la nervure de fixation 126 comporte au moins deux lames 404a-b apposées l'une contre l'autre.

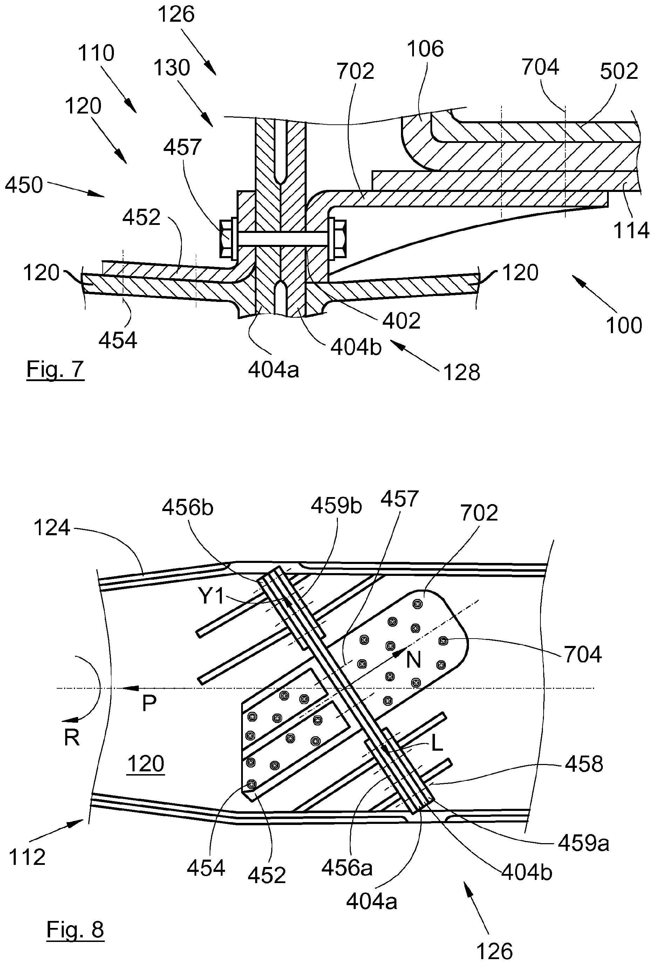

Dans le mode de réalisation de l'invention présenté sur les Figs. 4 à 8, des moyens additionnels de fixation 450 sont agencés entre le longeron supérieur 120 et la nervure de fixation 126. Ces moyens additionnels de fixation 450 comportent ici une première cornière centrale 452 qui présente une première paroi fixée au longeron supérieur 120 par des premiers boulons 454 à axe perpendiculaire au longeron supérieur 120, et une deuxième paroi fixée à la face avant de la nervure de fixation 126 qui est orientée vers l'avant.

Les moyens additionnels de fixation 450 comportent également une deuxième cornière centrale 702 qui présente une première paroi fixée au longeron avant 106 et à la peau inférieure d'intrados 114 par des deuxièmes boulons 704 à axe perpendiculaire au longeron supérieur 120, et une deuxième paroi fixée à la face arrière de la nervure de fixation 126 qui est orientée vers l'arrière.

La première cornière centrale 452 et la deuxième cornière centrale 702 sont disposées sensiblement au centre de la fente 402 par rapport à sa longueur, de part et d'autre de la nervure de fixation 126 et en regard l'une de l'autre, c'est-à-dire que la deuxième paroi de la première cornière centrale 452 et la deuxième paroi de la deuxième cornière centrale 702 se font face.

Les moyens additionnels de fixation 450 comportent également des boulons additionnels 457 à axe perpendiculaire à la nervure de fixation 126, qui traversent la nervure de fixation 126 ainsi que la deuxième paroi de la première cornière centrale 452 et la deuxième paroi de la deuxième cornière centrale 702 de manière à serrer la nervure de fixation 126 entre les deux deuxièmes parois. Les boulons additionnels 457 fixent ainsi la deuxième cornière centrale 702 à la première cornière centrale 452 à travers la nervure de fixation 126.

La première cornière centrale 452 et la deuxième cornière centrale 702 sont disposées hors du caisson primaire.

Les moyens additionnels de fixation 450 comportent également ici, de part et d'autre de la première cornière centrale 452, un premier pli 456a-b du longeron supérieur 120, où chacun des premiers plis 456a-b présente une face intérieure qui vient en appui contre une face, ici la face avant, de la nervure de fixation 126.

Les moyens additionnels de fixation 450 comportent également deux deuxièmes plis 459a-b du longeron supérieur 120, où chaque deuxième pli 459a-b est disposé en regard d'un premier pli 456a-b et présente une face intérieure qui vient en appui contre l'autre face, ici la face arrière, de la nervure de fixation 126. Les deux deuxièmes plis 459a-b sont ainsi disposés de part et d'autre de la deuxième cornière centrale 702.

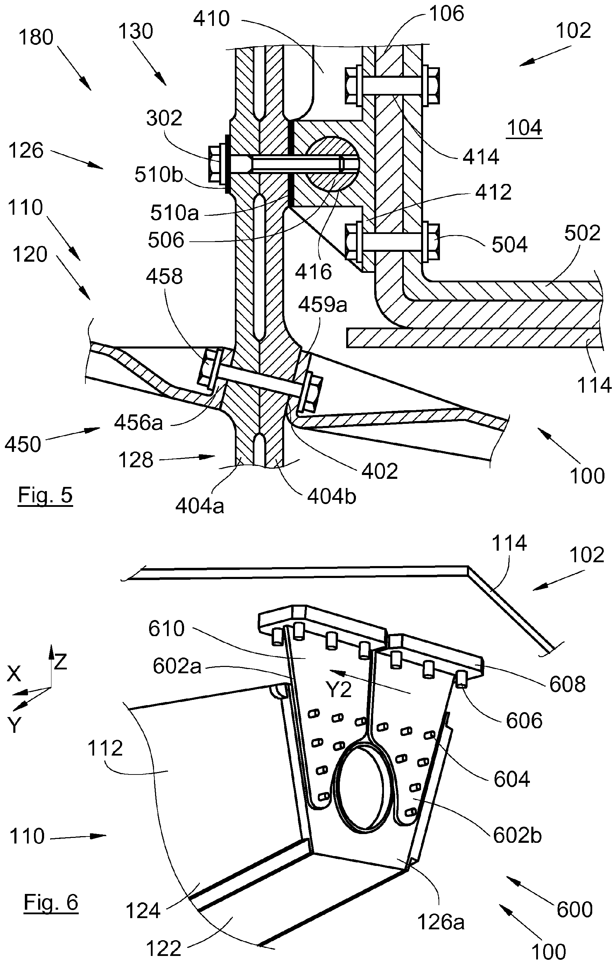

Les moyens additionnels de fixation 450 comportent des boulons traversants 458 qui traversent la nervure de fixation 126 et les deux plis 456a-b, 459a-b en regard de manière à serrer la nervure de fixation 126 entre les deux plis 456a-b, 459a-b. Dans le mode de réalisation de l'invention présenté sur la Fig. 5, la tête du boulon traversant 458 vient en appui contre la face extérieure du premier pli 456a, opposée à la face intérieure, et l'écrou vient en appui contre la face extérieure du deuxième pli 459a-b, opposée à la face intérieure, tandis que la tige filetée traverse les deux plis 456a et 459a-b et la nervure de fixation 126.

La poussée P issue du moteur 150 et traversant le mât d'accrochage 110 est transmise à l'aile 102 par décomposition suivant deux chemins d'effort avec une composante L parallèle au longeron avant 106 transmise au longeron avant 106 par la nervure de fixation 126 et les boulons de fixation 302, et une composante N perpendiculaire au longeron avant 106 transmise à la peau inférieure d'intrados 114 du caisson de voilure 104 par la première cornière centrale 452, la deuxième cornière centrale 702, les boulons additionnels 457, les premiers boulons 454 et les deuxièmes boulons 704.

La fixation de la partie supérieure 130 au longeron avant 106 peut se faire directement c'est-à-dire que les boulons de fixation 302 se fixent directement à travers le longeron avant 106, mais dans la mesure où le caisson de voilure 104 est généralement susceptible de contenir du carburant, la fixation des boulons de fixation 302 dans le longeron avant 106 doit être étanche et est réalisée par exemple avec des goujons étanches.

Dans le mode de réalisation de l'invention présenté sur les Figs. 3 à 5, la partie supérieure 130 de la nervure de fixation 126 prend la forme d'un U et l'ensemble 100 comporte, pour chaque branche du U, une plaque 410 qui est fixée entre la face avant du longeron avant 106 et la face arrière de la branche du U, c'est-à-dire de la nervure de fixation 126. Chaque plaque 410 constitue donc une interface intercalée entre le longeron avant 106 et la nervure de fixation 126.

Dans le mode de réalisation de l'invention présenté à la Fig. 5, le longeron avant 106 est renforcé par une équerre 502 logée à l'arrière du longeron avant 106 et qui participe à la transmission de la composante N.

Chaque plaque 410 comporte un sabot 412 qui est appliqué et fixé contre la face avant du longeron avant 106. Le sabot 412 présente des alésages 414 dont les axes sont perpendiculaires à la nervure de fixation 126 et qui reçoivent des boulons d'ancrage 504 qui fixent le sabot 412 au longeron avant 106 en prenant en sandwich le sabot 412 et le longeron avant 106, et dans le mode de réalisation particulier décrit ici, également l'équerre 502. La fixation du sabot 412 au longeron avant 106 est préférentiellement étanche.

L'écrou 506 de chaque boulon de fixation 302 est alors intégré à la plaque 410. Dans le mode de réalisation de l'invention présenté sur les Figs. 4 et 5, l'écrou 506 est un écrou à barillet (de l'anglais « barrel nut ») qui loge dans une niche cylindrique 416 de la plaque 410.

Dans ce mode de réalisation particulier, chaque boulon de fixation 302 fixe ainsi la partie supérieure 130 au longeron avant 106 à travers chaque plaque 410.

Afin d'ajuster la flexibilité de l'ensemble 100 et de diminuer les efforts liés au déplacement axial tout en maintenant la capacité de flambage de l'ensemble 100, des rondelles souples 510a-b, par exemple en élastomère, sont disposées entre la plaque 410 et la nervure de fixation 126 et entre la nervure de fixation 126 et la tête de chaque boulon de fixation 302. Les rondelles souples 510a-b permettent un déplacement suivant l'axe des boulons sans chargement en flexion de la nervure de fixation 126. Le but est de permettre le déplacement relatif de la nervure 130 par rapport au longeron 106 de l'aile (suivant l'axe des boulons de fixation 302) sans surcharge hors plan de celle-ci.

Il est également possible d'augmenter la flexibilité de l'ensemble 100 en augmentant la distance verticale entre les boulons traversants 458 et la première rangée de boulons de fixation 302.

La Fig. 6 montre un exemple d'une attache arrière 600 entre le mât d'accrochage 110 et l'aile 102 et qui est agencée au niveau de la nervure de fermeture arrière 126a et qui permet de gérer l'allongement relatif entre le mât d'accrochage 110 et l'aile 102.

L'attache arrière 600 comporte deux ferrures 602a-b où chacune comporte une base 608 fixée à la peau inférieure d'intrados 114 et une paroi 610 qui est parallèle à la nervure de fermeture arrière 126a et fixée contre la nervure de fermeture arrière 126a. La paroi 610 est ainsi globalement perpendiculaire à la base 608.

La base 608 est fixée à la peau inférieure d'intrados 114 par des boulons verticaux 606 dont les axes sont perpendiculaires à la peau inférieure d'intrados 114.

La paroi 610 est fixée à la nervure de fermeture arrière 126a par des boulons horizontaux 604 dont les axes sont perpendiculaires à la nervure de fermeture arrière 126a.

En outre, le moment d'axe vertical R s'équilibre au caisson de voilure 104 par deux efforts de direction adverse, à savoir un effort Y1 sensiblement horizontal parallèle à la nervure de fixation 126 transmis par les boulons 302 et un effort Y2 sensiblement horizontal parallèle à la nervure de fermeture arrière 126a transmis par les boulons 604. De ce fait, il est préférable de minimiser la part de ce moment d'axe vertical repris par flexion-torsion de la nervure de fixation 126 qui est donc dessinée de façon à minimiser les contraintes de flexion issues de la déformation du caisson primaire.

Ici encore les parois 610 agissent comme des plaques de flexion permettant un déplacement différentiel suivant X entre la nervure de fixation arrière 126a et la base 608. Là encore on veillera en jouant sur la géométrie à ce que lesdites contraintes de flexion ne dépassent pas le tiers des contraintes induites dans le plan de la plaque.

## Revendications

1. Ensemble (100) pour un aéronef (10) et comportant :
- une aile (102) comprenant un caisson de voilure (104) en partie réalisée à l'aide d'un longeron avant (106) ;
- un mât d'accrochage (110) agencé sous l'aile (102) et comportant une structure primaire (112) en forme de caisson primaire présentant un longeron supérieur (120) s'étendant au moins en partie sous le caisson de voilure (104) et présentant une fente (402), un longeron inférieur (122), des panneaux latéraux (124) et une nervure transversale de renfort (126), dite nervure de fixation, dont une partie inférieure (128) est logée et fixée à l'intérieur de la structure primaire (112) et dont une partie supérieure (130) traverse la fente (402) ;
- des moyens de fixation (180) qui assurent la fixation de la partie supérieure (130) au longeron avant (106) et où les moyens de fixation comportent une pluralité de boulons de fixation (302) où chaque boulon de fixation (302) fixe la partie supérieure (130) au longeron avant (106) et présente son axe perpendiculairement à la nervure de fixation (126) ;
**caractérisé en ce que** l'ensemble comporte - des moyens additionnels de fixation (450) agencés entre le longeron supérieur (120) et la nervure de fixation (126), les moyens additionnels de fixation (450) comportant une première cornière centrale (452) fixée au longeron supérieur (120) par des premiers boulons (454) à axe perpendiculaire au longeron supérieur (120), une deuxième cornière centrale (702) en regard de la première cornière centrale (452) et fixée au longeron avant (106) par des deuxièmes boulons (704) où la première cornière centrale (452) et la deuxième cornière centrale (702) sont disposées de part et d'autre de la nervure de fixation (126), et des boulons additionnels (457) à axe perpendiculaire à la nervure de fixation (126) qui fixent la deuxième cornière centrale (702) à la première cornière centrale (452) à travers la nervure de fixation (126) ; où les moyens additionnels de fixation (450) comportent de part et d'autre de la première cornière centrale (452), un premier pli (456a-b) du longeron supérieur (120), où chacun des premiers plis (456a-b) présente une face intérieure en appui contre une face de la nervure de fixation (126) ; deux deuxièmes plis (459a-b), où chaque deuxième pli (459a-b) est disposé en regard d'un premier pli (456a-b) et présente une face intérieure en appui contre l'autre face de la nervure de fixation (126) ; et des boulons traversants (458) qui traversent la nervure de fixation (126) et les deux plis (456a-b, 459a-b) en regard de manière à serrer les deux plis (456a-b, 459a-b) contre la nervure de fixation (126).

2. Ensemble (100) selon l'une des revendications précédentes, **caractérisé en ce que** la nervure de fixation (126) comporte au moins deux lames (404a-b) apposées l'une contre l'autre.

3. Ensemble (100) selon l'une des revendications 1 à 2, **caractérisé en ce que** la fixation des boulons de fixation (302) dans le longeron avant (106) est étanche.

4. Ensemble (100) selon l'une des revendications 1 à 2, **caractérisé en ce que** la partie supérieure (130) prend la forme d'un U, **en ce que** l'ensemble comporte, pour chaque branche du U, une plaque (410) intercalée entre le longeron avant (106) et la branche du U, **en ce que** chaque plaque (410) présente un sabot (412) qui est appliqué et fixé contre le longeron avant (106) et qui présente des alésages (414) dont les axes sont perpendiculaires à la nervure de fixation (126) et qui reçoivent des boulons d'ancrage (504) qui fixent le sabot (412) et le longeron avant (106), et **en ce que** l'écrou (506) de chaque boulon de fixation (302) est intégré à la plaque (410).

5. Ensemble (100) selon la revendication 4, **caractérisé en ce qu'**il comporte des rondelles souples (510a-b) disposées entre la plaque (410) et la nervure de fixation (126) et entre la nervure de fixation (126) et la tête de chaque boulon de fixation (302).

6. Ensemble (100) selon l'une des revendications 1 à 5, **caractérisé en ce que** le caisson primaire formant la structure primaire (112) présente une nervure de fermeture arrière (126a) fermant l'arrière du caisson primaire, **en ce que** le caisson de voilure (104) est également formé par une peau inférieure d'intrados (114), et **en ce que** l'ensemble (100) comporte une attache arrière (600) comprenant deux ferrures (602a-b) où chacune comporte une base (608) fixée à la peau inférieure d'intrados (114) par des boulons verticaux (606) dont les axes sont perpendiculaires à la peau inférieure d'intrados (114), et une paroi (610) qui est parallèle à la nervure de fermeture arrière (126a) et fixée contre la nervure de fermeture arrière (126a) par des boulons horizontaux (604) dont les axes sont perpendiculaires à la nervure de fermeture arrière (126a), où les parois (610) agissent comme des plaques de flexion permettant un déplacement différentiel suivant X.

7. Aéronef (10) comportant au moins un ensemble (100) selon l'une des revendications précédentes.

## Patentansprüche

1. Anordnung (100) für ein Luftfahrzeug (10) und beinhaltend:
- einen Flügel (102), der einen Tragflächenkasten (104) umfasst, der teilweise mithilfe eines vorderen Längsträgers (106) ausgeführt ist;
- einen Aufhängungspylon (110), der unter dem Flügel (102) angeordnet ist und eine Primärstruktur (112) in Form eines Primärkastens beinhaltet, die einen oberen Längsträger (120), der sich zumindest teilweise unter dem Tragflächenkasten (104) erstreckt und einen Schlitz (402) aufweist, einen unteren Längsträger (122), Seitenplatten (124) und eine Verstärkungsquerrippe (126), Befestigungsrippe genannt, von der ein unterer Teil (128) im Innern der Primärstruktur (112) aufgenommen und befestigt ist und von der ein oberer Teil (130) den Schlitz (402) durchdringt, beinhaltet;
- Befestigungsmittel (180), die die Befestigung des oberen Teils (130) an dem vorderen Längsträger (106) gewährleisten, und wobei die Befestigungsmittel eine Vielzahl von Befestigungsschrauben (302) beinhalten, wobei jede Befestigungsschraube (302) den oberen Teil (130) an dem vorderen Längsträger (106) befestigt und eine senkrecht zur Befestigungsrippe (126) verlaufende Achse aufweist;
**dadurch gekennzeichnet, dass** die Anordnung zusätzliche Befestigungsmittel (450) beinhaltet, die zwischen dem oberen Längsträger (120) und der Befestigungsrippe (126) angeordnet sind, wobei die zusätzlichen Befestigungsmittel (450) ein erstes zentrales Winkelprofil (452), das an dem oberen Längsträger (120) mit ersten Schrauben (454) mit senkrecht zum oberen Längsträger (120) verlaufender Achse befestigt ist, und ein zweites zentrales Winkelprofil, das (702) dem ersten zentralen Winkelprofil (452) gegenüberliegt und an dem vorderen Längsträger (106) mit zweiten Schrauben (704) befestigt ist, wobei das erste zentrale Winkelprofil (452) und das zweite zentrale Winkelprofil (702) beidseits der Befestigungsrippe (126) angeordnet sind, und zusätzliche Schrauben (457) mit senkrecht zur Befestigungsrippe (126) verlaufender Achse, die das zweite zentrale Winkelprofil (702) an dem ersten zentralen Winkelprofil (452) durch die Befestigungsrippe (126) hindurch befestigen, beinhalten; wobei die zusätzlichen Befestigungsmittel (450) beidseits des ersten zentralen Winkelprofils (452) eine erste Umbiegung (456a-b) des oberen Längsträgers (120), wobei jede der ersten Umbiegungen (456a-b) eine Innenseite aufweist, die an einer Seite der Befestigungsrippe (126) anliegt; zwei zweite Umbiegungen (459a-b), wobei jede zweite Umbiegung (459a-b) gegenüber einer ersten Umbiegung (456a-b) angeordnet ist und eine Innenseite aufweist, die an der anderen Seite der Befestigungsrippe (126) anliegt; und durchgehende Schrauben (458) beinhalten, die die Befestigungsrippe (126) und die beiden gegenüberliegenden Umbiegungen (456a-b, 459a-b) so durchdringen, dass die beiden Umbiegungen (456a-b, 459a-b) gegen die Befestigungsrippe (126) gepresst werden.

2. Anordnung (100) nach einem der vorhergehenden Ansprüche, **dadurch gekennzeichnet, dass** die Befestigungsrippe (126) mindestens zwei Zungen (404a-b) beinhaltet, die aneinander gesetzt sind.

3. Anordnung (100) nach einem der Ansprüche 1 bis 2, **dadurch gekennzeichnet, dass** die Befestigung der Befestigungsschrauben (302) in dem vorderen Längsträger (106) dicht ist.

4. Anordnung (100) nach einem der Ansprüche 1 bis 2, **dadurch gekennzeichnet, dass** der obere Teil (130) die Form eines U annimmt, dass die Anordnung für jeden Schenkel des U eine Platte (410) beinhaltet, die zwischen den vorderen Längsträger (106) und den Schenkel des U gesetzt ist, dass jede Platte (410) einen Schuh (412) aufweist, der an den vorderen Längsträger (106) angelegt und daran befestigt ist und der Bohrungen (414) aufweist, deren Achsen senkrecht zur Befestigungsrippe (126) verlaufen und die Verankerungsschrauben (504) aufnehmen, die den Schuh (412) und den vorderen Längsträger (106) befestigen, und dass die Mutter (506) jeder Befestigungsschraube (302) in die Platte (410) integriert ist.

5. Anordnung (100) nach Anspruch 4, **dadurch gekennzeichnet, dass** sie flexible Unterlegscheiben (510a-b) beinhaltet, die zwischen der Platte (410) und der Befestigungsrippe (126) und zwischen der Befestigungsrippe (126) und dem Kopf jeder Befestigungsschraube (302) angeordnet sind.

6. Anordnung (100) nach einem der Ansprüche 1 bis 5, **dadurch gekennzeichnet, dass** der die Primärstruktur (112) bildende Primärkasten eine hintere Abschlussrippe (126a) aufweist, die die Rückseite des Primärkastens verschließt, dass der Tragflächenkasten (104) auch durch eine Unterhaut (114) gebildet wird und dass die Anordnung (100) ein hinteres Verbindungsstück (600) beinhaltet, das zwei Beschlagteile (602a-b) umfasst, wobei jedes eine Grundseite (608) beinhaltet, die an der Unterhaut (114) mit vertikalen Schrauben (606) befestigt ist, deren Achsen senkrecht zur Unterhaut (114) verlaufen, und eine Wand (610), die parallel zur hinteren Abschlussrippe (126a) verläuft und an der hinteren Abschlussrippe (126a) mit horizontalen Schrauben (604) befestigt ist, deren Achsen senkrecht zur hinteren Abschlussrippe (126a) verlaufen, wobei die Wände (610) wie Flexionsplatten wirken, die eine differentielle Verlagerung entlang X erlauben.

7. Luftfahrzeug (10), das mindestens eine Anordnung (100) nach einem der vorhergehenden Ansprüche beinhaltet.

## Claims

1. Assembly (100) for an aircraft (10) and comprising:
- a wing (102) comprising an airfoil box (104) partly produced using a front spar (106);
- a mounting pylon (110) arranged under the wing (102) and comprising a primary structure (112) in the form of a primary box having a top spar (120) extending at least partly under the airfoil box (104) and having a slit (402), a bottom spar (122), lateral panels (124) and a transverse reinforcing rib (126), called fixing rib, of which a bottom part (128) is housed and fixed inside the primary structure (112) and of which a top part (130) passes through the slit (402);
- fixing means (180) which ensure the fixing of the top part (130) to the front spar (106) and where the fixing means comprise a plurality of fixing bolts (302), where each fixing bolt (302) fixes the top part (130) to the front spar (106) and has its axis at right angles to the fixing rib (126);
**characterized in that** the assembly comprises
additional fixing means (450) arranged between the top spar (120) and the fixing rib (126), the additional fixing means (450) comprising a first central angle iron (452) fixed to the top spar (120) by first bolts (454) with axis at right angles to the top spar (120), a second central angle iron (702) facing the first central angle iron (452) and fixed to the front spar (106) by second bolts (704), where the first central angle iron (452) and the second central angle iron (702) are arranged on either side of the fixing rib (126), and additional bolts (457) with axis at right angles to the fixing rib (126) which fix the second central angle iron (702) to the first central angle iron (452) through the fixing rib (126) ;
where the additional fixing means (450) comprise, on either side of the first central angle iron (452), a first ply (456a-b) of the top spar (120), where each of the first plies (456a-b) has an inner face bearing against a face of the fixing rib (126); two second plies (459a-b), where each second ply (459a-b) is arranged facing a first ply (456a-b) and has an inner face bearing against the other face of the fixing rib (126); and through bolts (458) which pass through the fixing rib (126) and the two facing plies (456a-b, 459a-b) so as to clamp the two plies (456a-b, 459a-b) against the fixing rib (126).

2. Assembly (100) according to one of the preceding claims, **characterized in that** the fixing rib (126) comprises at least two blades (404a-b) affixed against one another.

3. Assembly (100) according to either of Claims 1 and 2, **characterized in that** the fixing of the fixing bolts (302) in the front spar (106) is seal-tight.

4. Assembly (100) according to either of Claims 1 and 2, **characterized in that** the top part (130) takes the form of a U, **in that** the assembly comprises, for each branch of the U, a plate (410) inserted between the front spar (106) and the branch of the U, **in that** each plate (410) has a shoe (412) which is pressed and fixed against the front spar (106) and which has bores (414) whose axes are at right angles to the fixing rib (126) and which receive anchoring bolts (504) which fix the shoe (412) and the front spar (106), and **in that** the nut (506) of each fixing bolt (302) is incorporated in the plate (410) .

5. Assembly (100) according to Claim 4, **characterized in that** it comprises flexible washers (510a-b) arranged between the plate (410) and the fixing rib (126) and between the fixing rib (126) and the head of each fixing bolt (302).

6. Assembly (100) according to one of Claims 1 to 5, **characterized in that** the primary box forming the primary structure (112) has a rear closing rib (126a) closing the rear of the primary box, **in that** the airfoil box (104) is also formed by a lower surface bottom skin (114), and **in that** the assembly (100) comprises a rear attachment (600) comprising two fittings (602a-b), where each comprises a base (608) fixed to the lower surface bottom skin (114) by vertical bolts (606) whose axes are at right angles to the lower surface bottom skin (114), and a wall (610) which is parallel to the rear closing rib (126a) and fixed against the rear closing rib (126a) by horizontal bolts (604) whose axes are at right angles to the rear closing rib (126a), where the walls (610) act as flexbeams allowing a differential displacement on X.

7. Aircraft (10) comprising at least one assembly (100) according to one of the preceding claims.
